# EUROPÄISCHE PATENTANMELDUNG

(11) **EP 1 837 222 A1**
(43) Veröffentlichungstag der Anmeldung: **26.09.2007**
(21) Anmeldenummer: 07005248.5
(22) Anmeldetag: 14.03.2007
(51) Int. Cl.: B60J 7/20, E05F 15/00

(54) **Anordnung zur Steuerung der Bewegung schwenkbarer Fahrzeugteile**

(30) Priorität: 23.03.2006 DE 102006013924
(71) Anmelder: Rausch und Pausch GmbH, 95100 Selb (DE)
(72) Erfinder: Wagner, Tobias, 21149 Hamburg (DE)
(74) Vertreter: Donath, Dirk

(57) **Zusammenfassung**

Die Erfindung betrifft eine Anordnung zur Steuerung der Bewegung schwenkbarer Fahrzeugteile.

Die Aufgabe der Erfindung, die aufgezeigten Mängel des Standes der Technik auf einfache Art und Weise zu beheben und eine Anordnung zur Steuerung der Bewegung schwenkbarer Fahrzeugteile anzugeben, die aufwandgering realisiert werden kann, wird dadurch gelöst, dass die Anordnung zur Steuerung der Bewegung schwenkbarer Fahrzeugteile, wie Cabriodach (3) und / oder Heckdeckel (4), mindestens einen Distanzsensor (1) und eine Steuereinheit umfasst, die regelnd in die Bewegung mindestens eines Motors, vermittels dessen die Fahrzeugteile bewegbar sind, eingreifen.

## Beschreibung

Die Erfindung betrifft eine Anordnung zur Steuerung der Bewegung schwenkbarer Fahrzeugteile, wie eines Cabriodaches und/oder eines Heckdeckels.

Heutige Cabriodächer sind mit Antrieben ausgestattet, mit denen sie sich vollautomatisch öffnen und schließen lassen. Hierzu werden Motoren für die verschiedenen Einzelbewegungen des Daches in der Kinematik angeordnet und über eine elektronische Schaltung gesteuert. Zur Steuerung der einzelnen Bewegungen sind die einzelnen Komponenten (z. B. Verschlüsse, Dach, Spannbügel, Verdeckkastendeckel) mit Endschaltern ausgestattet, die das Erreichen bestimmter Positionen der Komponenten an eine Steuerung melden, welche die Bewegungen koordiniert und z. B. Ventile einer Antriebshydraulik ansteuert.

So offenbart bspw. DE 101 11 705 A1 ein Cabriosystem mit komplexen Mehrgelenkkinematiken, die in der Regel von Hydraulikzylindern angetrieben werden und die Drehbewegungen mit Lenkern auf die zu bewegenden Dachteile übertragen.

Aus der Schrift EP 1 160 113 A2 ist die Verwendung von Schwenkmotoren als Aktuatoren bekannt, die im Hauptlager an der Karosserie fest und/oder an wichtigen Gelenkstellen zwischen den starren Dachteilen beweglich angeordnet sind und elektrisch oder hydraulisch angetrieben werden.

Die Schrift DE 199 52 590 A1 offenbart zur Ermittlung und Steuerung der Position eines Cabriodaches eine Vorrichtung, mit der die Position der beweglichen Hydraulikelemente und damit des Verdecks zuverlässig und präzise erfasst wird, indem jedem Hydraulikelement ein als restriktiver Wegaufnehmer ausgebildeter Sensor zugeordnet ist, der in der hohlgebohrten Kolbenstange des Kolbens des Hydraulikzylinders integriert ist und dessen Ausgangssignaländerung (Ausgangsspannungsänderung) von einer Steuereinheit ausgewertet wird.

Aus der Schrift DE 199 18 628 A1 ist eine kolbenstangenbetriebene Dachkinematik bekannt, wobei die Gelenkhebelstellung dieser Kinematik vermittels abfühlender Mikroschalter oder Potentiometer detektiert und als Signale an einen Mikroprozessor zur Steuerung der ausfahrenden und der zurückziehenden Bewegung der Kolbenstange weitergeleitet werden.

Die Schrift US 5,225,747 offenbart eine Anordnung mit einem Messmittel in Form eines Sensors, wie bspw. auch einem Potentiometer, das auf einer Drehachse angeordnet ist und zur Ermittlung und Steuerung der Position eines Cabriodaches dient.

Die DE 692 08 444 T3 offenbart eine Sensorik, die die Position der einzelnen Komponenten über den gesamten Bewegungsablauf erfasst und die Bauteile so koordiniert bewegen lässt, dass die einzelnen Komponenten z. B. zur Beschleunigung des Öffnungsprozesses eines Daches zeitlich überlagert angesteuert werden können.

Die Steuerung der Dachsysteme mittels Endschaltern führt zu einem rein sequenziellen Ablauf. Die Bewegungen laufen eine nach der anderen ab, wodurch die Zeit für den Gesamtprozess der Dachöffnung sehr lang wird. Darüber hinaus wird die Leistung des Antriebssystems über große Teile des Prozesses nicht ausgenutzt, da die Bewegungsabläufe der einzelnen Komponenten veränderliche Kraftbedarfe über den Weg aufweisen, und so nicht die Antriebsleistung die Ablaufzeit bestimmt, sondern Parameter wie maximale Drehzahl (E-Motoren) oder maximaler Volumenstrom (Hydraulik).

Die in DE 692 08 444 T3 offenbarte Steuerung führt zu der Anordnung von Sensoren (bspw. eines Drehpotentiometers) in der Kinematik eines Dachsystems, also in einem Bereich mit stark eingeschränktem Platzangebot. Darüber hinaus müssen die Kabel zu den Sensoren durch die Kinematik teilweise über mehrere Drehachsen geführt werden, was zu Beschädigung und Systemausfall führen kann.
Für die Koordination der Bewegungen mehrerer Komponenten gleichzeitig müssen die einzeln gemessenen Bewegungskoordinaten ausgewertet und deren Zusammenwirken berechnet werden. Die Messung der Position der bewegten Komponenten erfolgt indirekt über Winkelstellungen in der Kinematik und unterliegt somit starken Toleranzschwankungen in den Bauteilen. Dies führt zwecks Vermeidung von Kollisionen zu großen Toleranzzuschlägen bei den einzuhaltenden Abständen und damit zu Verlusten in der Zeit für den Betätigungsprozess.

Durch die vorliegende Erfindung sollen die aufgezeigten Mängel des Standes der Technik auf einfache Art und Weise behoben und eine Anordnung zur Steuerung schwenkbarer Fahrzeugteile, wie Cabriodach und/oder Heckdeckel, geschaffen werden, die aufwandgering realisiert werden kann. Darüber hinaus soll ein Verfahren zur Endlagenannäherung angegeben werden.

Die vorstehend genannte Aufgabe wird durch die Merkmale des ersten Patentanspruchs gelöst und durch die Merkmale der Unteransprüche vorteilhaft ausgestaltet.

Das Wesen der Erfindung liegt im Einsatz von Einrichtungen zur Messung von Abständen der Verdeckkomponenten zueinander während der Verdeckbewegung.

Im Dachsystem sind an geeigneten Stellen Distanzsensoren (z. B. Ultraschallsensoren) platziert. Deren Signale werden in einer zentralen Steuereinheit, die mit den Distanzsensoren informations-/datenleitend verbunden sind, ausgewertet und für die Koordination der überlagerten Bewegungen des Verdecks und des Heckdeckels verwendet.
Dadurch wird, vergleichbar mit DE 692 08 444 T3, die Steuerung der Dachteile in zumindest teilweise simultan ablaufenden Bewegungen ermöglicht, wodurch sich die Zeit für den Gesamtprozess der Verdeckbewegung deutlich reduzieren lässt. Ebenfalls kann die Systemleistung auf mehrere Komponenten verteilt und so besser ausgenutzt werden.

Bei der erfindungsgemäßen Lösung müssen, im Gegensatz zum Stand der Technik, für die Koordination der Bewegungen wesentlich weniger Signale ausgewertet werden. Die Distanzsensoren können unabhängig von der Kinematik im Dach an den Stellen positioniert werden, an denen die für die Bewegungskoordination relevanten Abstände eingehalten werden müssen. Die Messung erfolgt dadurch direkt an der Stelle, wo eine Kollision vermieden werden muss, unterliegt also keinen Toleranzen der Kinematikteile. Somit kann die Überlagerung der einzelnen Teilbewegungen des Verdecks enger erfolgen.

Die Erfindung wird nachstehend an Hand einer schematischen Zeichnung von vier Ausführungsbeispielen näher erläutert. Es zeigen:

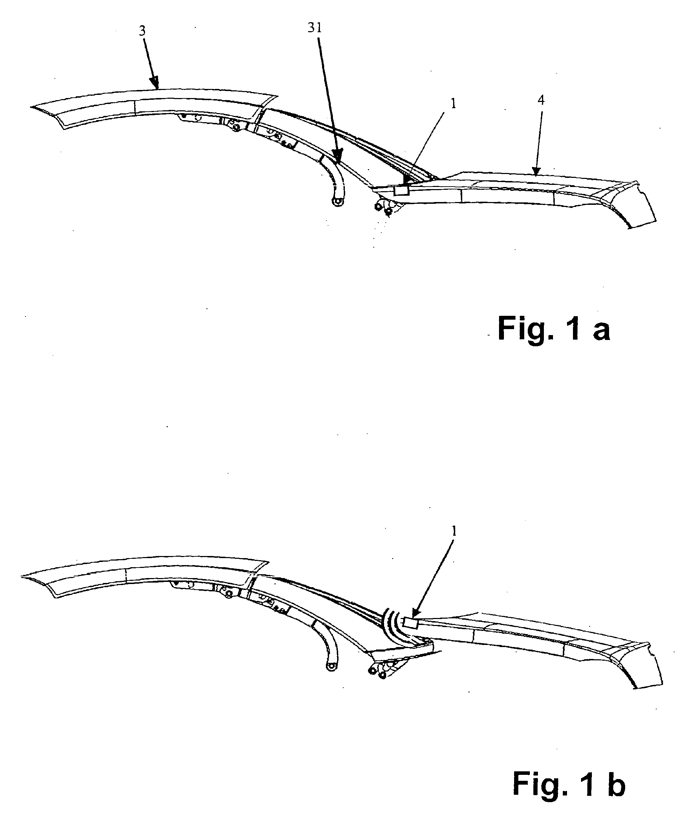

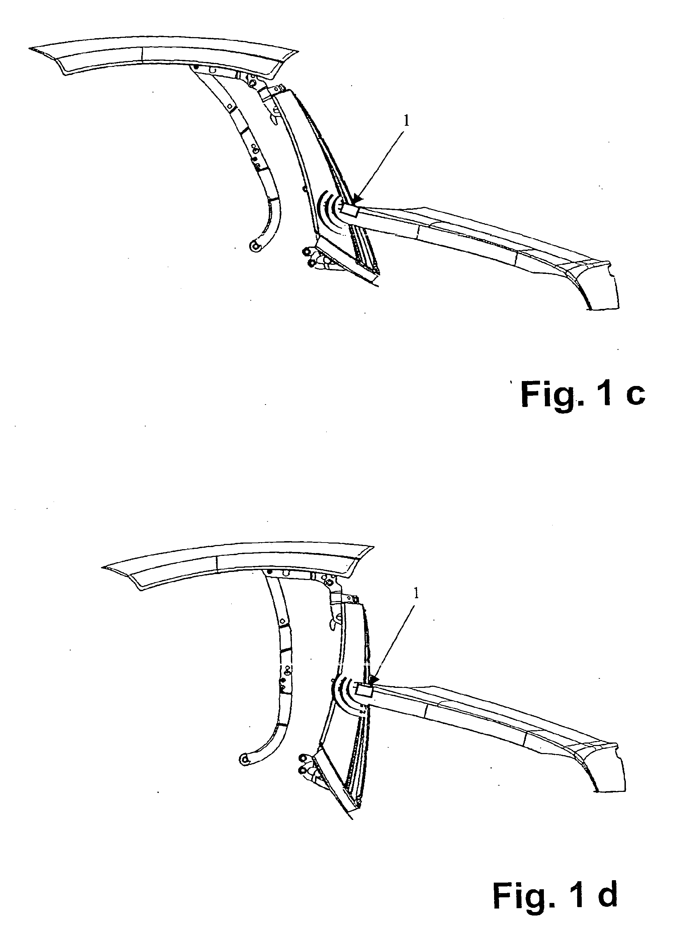

- Fig. 1a: eine erfindungsgemäße Anordnung bei geschlossenem Cabriodach,
- Fig. 1b: die erfindungsgemäße Anordnung gemäß Fig. 1a zum Zeitpunkt kurz nach dem Start des Bewegungsablaufs,
- Fig. 1c: eine erfindungsgemäße Anordnung gemäß Fig. 1a zum Zeitpunkt des Erreichens des kritischen Abstands zwischen Cabriodach und Heckklappe,
- Fig. 1d: eine erfindungsgemäße Anordnung gemäß Fig. 1a nach Erreichen des Zeitpunkts gemäß Fig. 1c, wobei der Abstand zwischen Cabriodach und Heckdeckel vermittels des Distanzsensors bestimmt und über die Dachmotoren, welche durch die Steuereinheit geregelt sind, in einem kollisionsunkritischen Zustand gehalten wird,

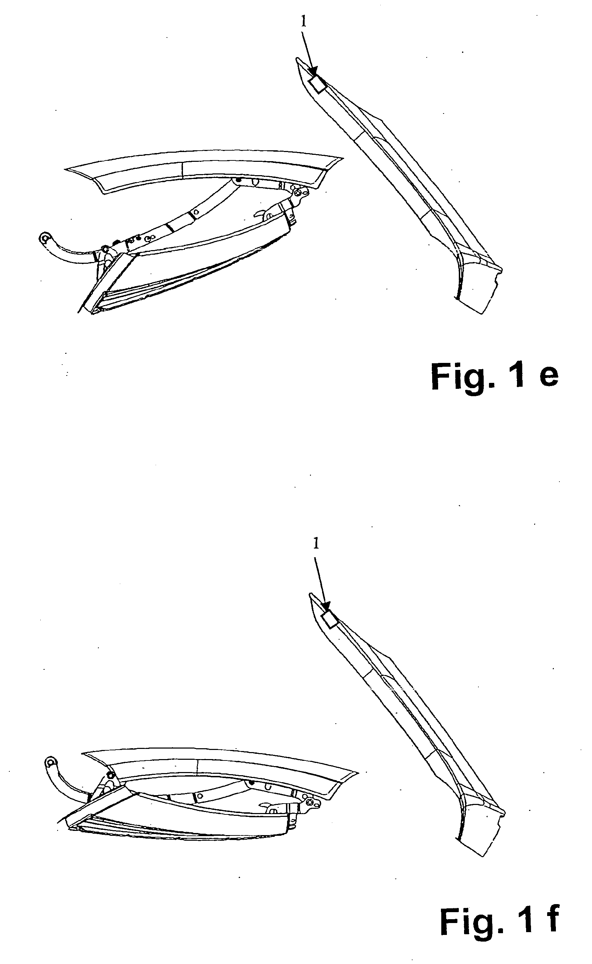

- Fig. 1e: die erfindungsgemäße Anordnung gemäß Fig. 1a zum Zeitpunkt kurz vor dem Erreichen der Endlage des geöffneten Cabriodachs, wobei sich der Abstand zwischen Cabriodach und Heckdeckel in einem kollisionsunkritischen Bereich befindet, so dass der Distanzsensor 1 außer Funktion gesetzt ist,
- Fig. 1f: die erfindungsgemäße Anordnung gemäß Fig. 1a zum Zeitpunkt des Ablegen des Cabriodaches im Heckbereich des Fahrzeugs, wobei der Distanzsensor 1 außer Funktion ist und

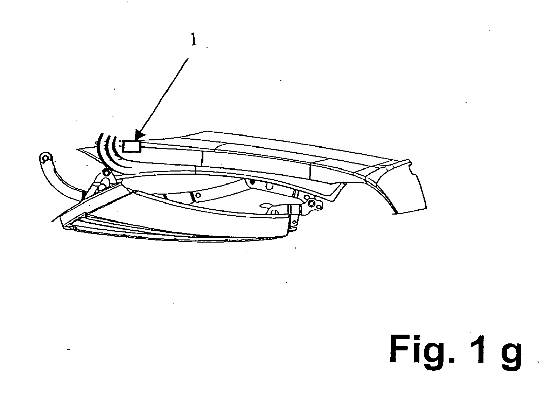

- Fig. 1g: die erfindungsgemäße Anordnung gemäß Fig. 1a zum Zeitpunkt des Schließens des Heckdeckels, wobei der Distanzsensor 1 aktiv ist und den Abstand beim Annähern des Deckels an die Schließanlage erfasst, wobei die Steuereinheit die Geschwindigkeit der Dachkinematikmotoren verringert, um ein Aufschlagen des Heckdeckels zuvermeiden.

Die in Fig. 1 dargestellte Anordnung zur Ermittlung und Steuerung der Position eines schwenkbaren Verdeckteiles / eines Cabriodaches und eines Heckdeckels 4 umfasst mindestens einen Distanzsensor 1 und eine in der Figur aus Übersichtsgründen nicht dargestellte Steuereinheit , die miteinander informationsleitend/datenleitend verbunden sind und vermittels derer der Abstand der hinteren Außenfläche 31 des Cabriodaches 3 zum Heckdeckel 4 erfass- und steuerbar ist, indem die Steuereinheit regelnd in die Bewegung der Dachkinematikmotoren (in der Figur aus Übersichtsgründen ebenfalls nicht dargestellt), vermittels derer das Cabriodach 3 für die einzelnen Dachfunktionen bewegt wird, eingreift.
Dabei ist der Distanzsensor 1 besonders vorteilhaft als Ultraschallsensor ausgebildet, der sich am Heckdeckel 4 befindet.
Der Distanzsensor 1 befindet sich vorteilhaft an der dem Cabriodach 3 zugewandten Seite des Heckdeckels 4.

Im öffnenden Betriebszustand des Cabriodaches 3 empfängt der Distanzsensor 1 den von ihm ausgesendeten und durch das Cabriodach 3 reflektierten Ultraschall, indem die Ultraschallabsendung beim Start der Cabriodach 3- und Heckdeckel 4- Bewegung beginnt. (Fig. 1a und 1b).

Je nach vermittels des Distanzsensors 1 ermittelten Abstandswertes gegenüber einem vorgebbaren Soll-Abgleichwert wird der Abstand des Cabriodaches 3 gegenüber dem Heckdeckel 4 ermittelt. Die ermittelten Abstansdaten werden von dem Distanzsensor 1 an die Steuereinheit übertragen, in der der Soll-Abgleichwert gespeichert ist.
Die einzelnen Soll-Abgleichwerte können beim Aufbau des Cabriodaches 3 auf das Fahrzeug für die einzelnen Positionen des Cabriodaches 3 erfolgen, indem das Fahrzeug auf einer ideal ebenen Fläche aufgestellt und das Dach in die Position gebracht wird, bei der kritische Abstände zwischen dem Cabriodach 3 und dem Heckdeckel 4 erreicht werden. Diese Soll-Abgleichwerte werden in der Steuereinheit gespeichert.

Im Verlauf des Bewegungsvorgangs von Cabriodach 3 und Heckdeckel 4 werden von Zeit zu Zeit bzw. ständig die von dem Distanzsensor 1 ermittelten Positionsdaten an die Steuereinheit übertragen und von dieser mit dem entsprechenden Soll-Abgleichwert verglichen, so dass durch die nicht in den Figuren dargestellte Steuereinheit die ebenfalls nicht in den Figuren dargestellten Dachkinematikmotoren angesteuert werden, so dass sich das Cabriodach 3 in seiner Bewegung regeln lässt.

Im verschließenden Betriebszustand durchlaufen Cabriodach 3 und Heckdeckel 4 in gegenüber dem öffnenden Zustand umgekehrter Abfolge und vermittels des Distanzsensors 1, der Steuereinheit und der (nicht in den Figuren dargestellten) Dachkinematikmotoren gesteuert die Schritte gemäß Fig. 1g bis 1a.

Der Vorteil der erfindungsgemäßen Anordnung gegenüber dem Stand der Technik besteht in
- der Reduktion der Zeit für die Gesamtbewegung des Dachablaufes
- der besseren Nutzung der Leistung des Antriebssystems
- der geringeren Sensorenzahl
- der Positionierung der Sensoren außerhalb platzkritischer Bereiche
- dem verringerten Mess- und Berechnungsaufwand
- der Messung direkt im Kollisionsbereich und
- der optimierten Ablaufzeit.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

| | | |
|---|---|---|
| 1 | - | Distanzsensor |
| 3 | - | Cabriodach |
| 31 | - | Außenfläche |
| 4 | - | Heckklappe |

## Patentansprüche

1. Anordnung zur Steuerung der Bewegung schwenkbarer Fahrzeugteile, wie Cabriodach (3) und / oder Heckdeckel (4), umfassend mindestens einen Distanzsensor (1) und eine Steuereinheit, wobei durch die Steuereinheit die Bewegung mindestens eines Motors, vermittels dessen die Fahrzeugteile bewegbar sind, regelbar ist.

2. Anordnung zur Steuerung der Bewegung schwenkbarer Fahrzeugteile gemäß Anspruch 1, **dadurch gekennzeichnet, dass** die Motoren Dachkinematikmotoren sind, vermittels derer das Cabriodach (3) und / oder der Heckdeckel (4) für die einzelnen Dachfunktionen bewegbar sind.

3. Anordnung zur Steuerung der Bewegung schwenkbarer Fahrzeugteile gemäß Anspruch 1, **dadurch gekennzeichnet, dass** sich der Distanzsensor (1) am Heckdeckel (4) befindet.

4. Anordnung zur Steuerung der Bewegung schwenkbarer Fahrzeugteile gemäß Anspruch 1, **dadurch gekennzeichnet, dass** sich der Distanzsensor (1) am Cabriodach (3) befindet.

5. Anordnung zur Steuerung der Bewegung schwenkbarer Fahrzeugteile gemäß Anspruch 1, **dadurch gekennzeichnet, dass** der Distanzsensor (1) aus einem Ultraschallsensor besteht.

6. Verfahren zur Steuerung der Bewegung schwenkbarer Fahrzeugteile unter Verwendung einer Anordnung gemäß Anspruch 2, **dadurch gekennzeichnet, dass** die Geschwindigkeit der Bewegung des Cabriodachs (3) und / oder des Heckdeckels (4) durch den Distanzsensor (1) und die Steuereinheit zur Endlagenannäherung geregelt wird.
